# EUROPÄISCHE PATENTANMELDUNG

(11) **EP 1 020 235 A1**
(43) Veröffentlichungstag der Anmeldung: **19.07.2000**
(21) Anmeldenummer: 99100419.3
(22) Anmeldetag: 11.01.1999
(51) Int. Cl.: B08B 3/14

(54) **Vorrichtung und Verfahren für die Pflege von Behandlungsbädern an Reinigungsanlagen**

(71) Anmelder: WACHE OBERFLÄCHENTECHNIK VERTRIEBSGES. mbH, 22844 Norderstedt (DE)
(72) Erfinder: KRÜCKEBERG, Günther, 22397 Hamburg (DE)
(74) Vertreter: Einsel, Martin, Dipl.-Phys.

(57) **Zusammenfassung**

Die vorliegende Erfindung betrifft eine Vorrichtung sowie ein Verfahren zur Badpflege von Reinigungsmedien in Reinigungsanlagen, insbesondere wie sie für die Reinigung von Werkstücken in der metallverarbeitenden Industrie, zum Beispiel der Motoren- und Getriebefertigung der Automobil- und Zulieferindustrie, eingesetzt werden, wobei das zu behandelnde Reinigungsmedium durch eine Badpflegeeinrichtung (4) außerhalb des Hauptstroms der Reinigungsanlage (15,18) mittels geeigneter Abscheide- und/oder Filtervorrichtungen (7,10,11) gereinigt und die anfallenden Verunreinigungen aus dem Kreislauf der Reinigungsanlage entfernt werden, insbesondere betrifft die Erfindung eine kontinuierlich Badpflege.

## Beschreibung

Die vorliegende Erfindung betrifft eine Vorrichtung und ein Verfahren für die Pflege von wäßrigen Behandlungsbädern an Reinigungsanlagen, insbesondere für Behandlungsbäder, die für Reinigungsanlagen in der metallverarbeitenden Industrie eingesetzt werden, vorzugsweise für die Reinigung von beispielsweise zerspanten Werkstücken für zum Beispiel die Motoren- und Getriebefertigung in der Automobil- und Zulieferindustrie.

Ein wesentlicher Faktor für den Betrieb von Reinigungsanlagen ist die Standzeit der eingesetzten Behandlungsbäder, so daß der Pflege oder Wiederaufbereitung, insbesondere der kontinuierlichen Pflege, der Behandlungsbäder eine besondere Bedeutung zukommt.

Optimale und automatisierte Pflegevorrichtungen für die vorzugsweise kontinuierliche Aufbereitung von Behandlungsbädern sind insbesondere in der Fertigung von zerspanten Werkstücken mit hohen Qualitätsanforderungen, z.B. in der modernen Motorenfertigung, von großer Bedeutung, da nur mit ausreichend sauberen Bädern oder Reinigungsmedien die dort bestehenden hohen Ansprüche an die Werkstücksreinheit erzielt werden können.

Da bereits geringste Mengen an Schmutzpartikeln wie z.B. Spänen, die an Werkstücken anhaften, deren vorzeitigen Ausfall bzw. beschleunigten Abnutzungsprozeß verursachen können, ist es für die Qualität und Lebensdauer der Werkstücke und der daraus gefertigten Fahrzeugteile wie Verbrennungsmotoren etc. wesentlich, den Restschmutzwert des gereinigten Werkstücks so gering wie möglich zu halten.

Die Erzielung eines geringen Restschmutzwertes setzt aber die Verwendung von sauberen Behandlungsbädern voraus.

Andererseits ist es aus Kostengründen, insbesondere infolge der hohen und in Zukunft absehbar weiter steigenden Entsorgungskosten der Behandlungsbäder erwünscht, die Standzeit der Bäder bei möglichst kleinem Volumen über optimal lange Betriebszeiten ausdehnen zu können. Daher kommt der Wiederaufbereitung der Behandlungsbäder, daß heißt der eingesetzten Reinigungsmedien, durch den Einsatz von geeigneten Badpflegesystemen eine zunehmend wachsende Bedeutung zu.

Die in der Reinigungstechnik von Werkstücken heute zum Einsatz gelangenden Reinigungsanlagen sind in der Regel eigenversorgt, daß heißt, sie sind mit einer eigenen autarken Behälteranlage ausgerüstet, deren Behandlungsmedium nur eine in Abhängigkeit zum Volumen stehende Öl-, Schmutzmenge aufnehmen kann. Wäßrige Behandlungsmedien, wie sie zum Beispiel zur Reinigung von zerspanten Werkstücken in der Motoren- und Getriebefertigung eingesetzt werden, können nur etwa 5 % des Badvolumens freie Öle oder Fette aufnehmen, bevor das Reinigungsmedium erneuert werden muß.

Die Standzeit eines Behandlungsmediums, zum Beispiel eines wäßrigen Behandlungsmediums, läßt sich aber selbst bei Einsatz optimaler Chemikaliendosierung und Filtersysteme nur durch geeignete Pflegemaßnahmen des Mediums, daß heißt, durch kontinuierlichen Austrag des eingeschleppten Öls und Feinstschmutzes, realisieren.

Bei herkömmlichen Reinigungsanlagen wird das bei der Reinigung der Werkstücke aus den Reinigungsvorrichtungen anfallende, mit Öl, Spänen und anderen Schmutzpartikeln belastete Behandlungsmedium einem Schmutzwassertank zugeführt, von dem aus das Behandlungsmedium im Hauptstrom in einer Filtervorrichtung weitestgehend von den Verunreinigungen befreit und dann in die Reinigungsvorrichtungen zurückgeführt wird.

Die Filtervorrichtung im Hauptstrom allein kann jedoch keine optimale Standzeit des Behandlungsmediums bei optimalem Reinigungsergebnis gewährleisten. Hierfür ist zusätzlich ein kontinuierlicher Austrag der anfallenden Feinstschmutzpartikel sowie der emulgierfähigen Öle und Fette aus dem Reinigungsmedium, daß heißt dem Hauptstrom, notwendig.

Bekannt ist die Filtervorrichtung des Hauptstroms von zurückgehaltenen Verunreinigungen zu befreien, indem die Filtervorrichtung mit dem Behandlungsmedium selbst gespült wird. Dabei wird die Verbindungsleitung zwischen Filtervorrichtung und Reinigungsvorrichtungen gesperrt, so daß der Behandlungsmediumstrom in die Filtervorrichtung zurückgeführt werden kann.
Das nunmehr mit den Verunreinigungen aus der Filtervorrichtung belastete Behandlungsmedium wird in Pflegevorrichtungen, wie Abblaseinheiten oder Absprühsysteme, geleitet, in denen die Verunreinigungen abgetrennt werden. Anschließend wird das erhaltene gereinigte Reinigungsmedium in den Hauptstrom zurückgeführt und die abgetrennten Verunreinigungen können aus dem Kreislauf der Anlage entfernt werden. Die Abtrennung erfolgt, indem das Behandlungsmedium in einer entsprechenden Vorrichtung von oben nach unten geführt und quer zur Fließrichtung des Mediums ein Fluidstrom, wie zum Beispiel Luft, eingeblasen wird. Der Fluidstrom führt das leichtere Behandlungsmedium mit sich, die schwereren Verunreinigungen dagegen bewegen sich weiter in Fließrichtung nach unten. Dieses Verfahren hat jedoch den Nachteil, daß die Abtrennung des Behandlungsmediums von Verunreinigungen nur unzureichend ist und das Behandlungsmedium, das in den Hauptstrom, vorzugsweise den Schmutzwassertank, zurückgeführt wird, insbesondere noch partikelförmige Verunreinigungen in einer Größenordnung enthält, wie sie in dem unbehandeltem Behandlungsmedium vor der Pflege enthalten sind. Mit anderen Worten, mit diesem Verfahren ist es nicht möglich, die Schmutzpartikelgröße in dem aufbereiteten Behandlungsmedium sicher so einzustellen, daß die maximale Partikelgröße kleiner ist, als die maximale Partikelgröße in dem unbehandeltem Behandlungsmedium vor der Pflege.

Es war daher Aufgabe der vorliegenden Erfindung, eine Vorrichtung und ein Verfahren zur Pflege von Behandlungsmedien für Reinigungsanlagen zur Verfügung zu stellen, mit dem eine optimale Standzeit des Behandlungsmediums bei gleichzeitig optimalem Reinigungsergebnis erzielt werden kann. Insbesondere war es Aufgabe, eine derartige Vorrichtung und ein derartiges Verfahren zur Verfügung zu stellen, mit dem bei optimaler Standzeit des Behandlungsmediums der Restschmutzanteil an dem gereinigten Werkstück auf wenige Milligramm begrenzt werden kann.

Gelöst wird diese Aufgabe, indem das mit Verunreinigungen belastete Behandlungsmedium (nachstehend auch als Reinigungsmedium bezeichnet) außerhalb des Hauptstroms der Reinigungsanlage einer geeigneten Badpflege unterzogen wird, wobei mittels einer geeigneten Abscheide- bzw. Filtervorrichtung Schmutzpartikel aus dem Reinigungsmedium soweit wie möglich oder erforderlich entfernt werden und die maximale Größe der noch im Reinigungsmedium verbleibenden Schmutzpartikel kleiner ist, als die maximale Größe der Schmutzpartikel in dem Reinigungsmedium vor Behandlung mit der erfindungsgemäßen Pflegevorrichtung.

Erfindungsgemäß kann das mit Verunreinigungen belastete Reinigungsmedium (nachfolgend auch als 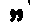 verbrauchtes^{"} oder 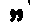 verschmutztes" Reinigungsmedium bezeichnet) in zwei separaten Schritten aufbereitet werden, wobei jeder Schritt für sich oder auch in Kombination durchgeführt werden kann.

Gemäß dem ersten Schritt gelangt das verbrauchte Reinigungsmedium über die Filtervorrichtung des Hauptstroms in die erfindungsgemäße Badpflegevorrichtung, wobei das Reinigungsmedium zur Spülung der Filtervorrichtung verwendet wird und mit den von der Filtervorrichtung zurückgehaltenen Verunreinigungen belastet ist. Dieses belastete Reinigungsmedium wird einer Badpflegeeinrichtung zugeführt, die mit einem Sedimentationstank und einer geeigneten Abscheide- bzw. Filtervorrichtung zur Feinabtrennung der Verunreinigungen von dem Reinigungsmedium ausgerüstet ist.

In diesem ersten Fall kann die Abscheidevorrichtung ein Drehtrommelfeinfilter sein, durch den das Reinigungsmedium in ein Sammelbecken (nachstehend auch Reinwasserabteil bezeichnet) für das auf bereitete Medium gelangt.

Der Sedimentationstank ist mit einer Fördervorrichtung zum Austrag der Verunreinigungen ausgestattet. Der Austrag kann prinzipiell kontinuierlich oder diskontinuierlich je nach Bedarf erfolgen.

Die Gewebefeinheit der ausgewählten Abscheide- bzw. Filtervorrichtung sollte möglichst klein sein, um eine möglichst weitgehende Abtrennung von Verunreinigungen aus dem Reinigungsmedium zu erzielen. Für eine Vorrichtung zur Badpflege in Reinigungsanlagen für die Motoren- und Getriebefertigung ist eine geeignete Gewebefeinheit in der Größenordnung von z.B. kleiner 80 µm.

Das im Reinwasserabteil gesammelte auf bereitete Behandlungsmedium kann in den Hauptstrom zurückgeführt werden. Vorzugsweise wird das Behandlungsmedium dem Schmutzwassertank zugesetzt, von wo aus es noch mal durch die Filtervorrichtung des Hauptstrom geführt werden kann, um ein besonders optimales Reinigungsergebnis zu erzielen.

Gemäß dem zweiten erfindungsgemäßen Schritt wird das verbrauchte Reinigungsmedium dem Schmutzwassertank direkt in einem Nebenstrom entnommen und der mit einer geeigneten Abscheide- bzw. Filtervorrichtung versehenen Badpflegevorrichtung zugeführt.
Die in diesem zweiten Schritt eingesetzte Abscheide- bzw. Filtervorrichtung richtet sich nach der Art der in dem verbrauchten Reinigungsmedium enthaltenen Verschmutzungen, daß heißt, sie wird ausgewählt in Abhängigkeit der Materialien der damit gereinigten Werkstücke.

Wurde das Reinigungsmedium zum Beispiel für die Behandlung von Graugußwerkstücken verwendet, enthält das verbrauchte Medium feinste metallhaltige Span- und Graphitteilchen, die vorteilhafterweise mit einem Magnetabscheider aus dem Medium entfernt werden können.
In diesem Fall hat es sich bewährt, den Magnetabscheider mit der Badpflegevorrichtung des ersten Schrittes zu kombinieren und das mit dem Magnetabscheider gewonnene, vorgereinigte Behandlungsmedium in den Sedimentationstank einzuleiten und zur Feinabtrennung über die Abscheide- bzw. Filtervorrichtung der Badpflegeeinrichtung laufen zu lassen. Dadurch wird sichergestellt, daß eventuell größere Schmutzpartikelteilchen, die von dem Magnetabscheider nicht zurückgehalten worden sind, aus dem Reinigungsmedium entfernt werden. Das aufbereitete Reinigungsmedium wird wiederum in dem Reinwasserabteil gesammelt und bei Bedarf in den Hauptstrom zurückgeführt.

Handelt es sich bei dem Reinigungsmedium um ein Medium, das zur Reinigung von Werkstücken aus nichtmagnetischen Materialien, wie Aluminium, Magnesium und/oder Aluminium- bzw. Magnesiumlegierungen verwendet worden ist, wird als Abscheidevorrichtung in der zweiten Stufe vorzugsweise ein Filter, zum Beispiel ein Druckbandfilter, mit geeigneter Gewebefeinheit eingesetzt. Die auf dem Bandfilter zurückgehaltenen Schmutzpartikel werden auf einfache Weise aus der Pflegevorrichtung ausgetragen. Das aufbereitete Reinigungsmedium kann direkt in ein Reinwasserabteil geleitet werden. Falls gewünscht, kann auch diese Variante der erfindungsgemäßen Badpflege in der zweiten Stufe mit der Badpflegevorrichtung wie sie in der ersten Stufe verwendet worden ist, kombiniert werden.

Wie bereits erwähnt, können die einzelnen erfindungsgemäßen Stufen der Badpflege jeweils für sich oder in Kombination durchgeführt werden. Sie können kontinuierlich oder absatzweise je nach Bedarf betrieben werden.

Falls erwünscht, kann die erfindungsgemäße Vorrichtung zusätzlich mit einer Vorrichtung zur Nachbehandlung des auf bereiteten Reinigungsmediums ausgerüstet sein, um beispielsweise verbliebene Restöl- und Schmutzanteile zu entfernen. Beispielsweise kann der Vorrichtung ein Verdampfer nachgeschaltet sein. In diesem Fall kann das aufbereitete Reinigungsmedium, das nunmehr weitestgehend frei von Verunreinigungen ist, direkt dem Saubertank der Reinigungsanlage zugeführt werden.

Mit der erfindungsgemäßen Vorrichtung und dem erfindungsgemäßen Verfahren können gereinigte Werkstücke, beispielsweise Werkstücke, wie sie die Lebensdauer eines Verbrennungsmotors bestimmen, wie Zylinderkopf, Zylinderkurbelgehäuse, Kurbel- und Nockenwelle etc., erhalten werden, deren Restschmutzwerte lediglich im Milligrammbereich liegen. So konnte beispielsweise der Restschmutz für einen Aluminiumzylinderkopf der 6-Zylinderbaureihe auf 5 mg und der eines Graugußkurbelgehäuses auf 10 mg begrenzt werden. Diese Werte belegen anschaulich die vorteilhafte Eignung des erfindungsgemäßen Badpflegesystems, insbesondere für Reinigungsmedien für Werkstücke, wie sie für die Motoren-, Lenkungs-, Achs- und Getriebefertigung oder artverwandte Bauteile, zum Beispiel in der Automobil- und Zulieferindustrie, eingesetzt werden.
Zudem kann die erfindungsgemäße Badpflege außerhalb des Hauptstroms der Reinigungsanlage durchgeführt werden und beeinträchtigt daher den Betrieb der Anlage nicht.

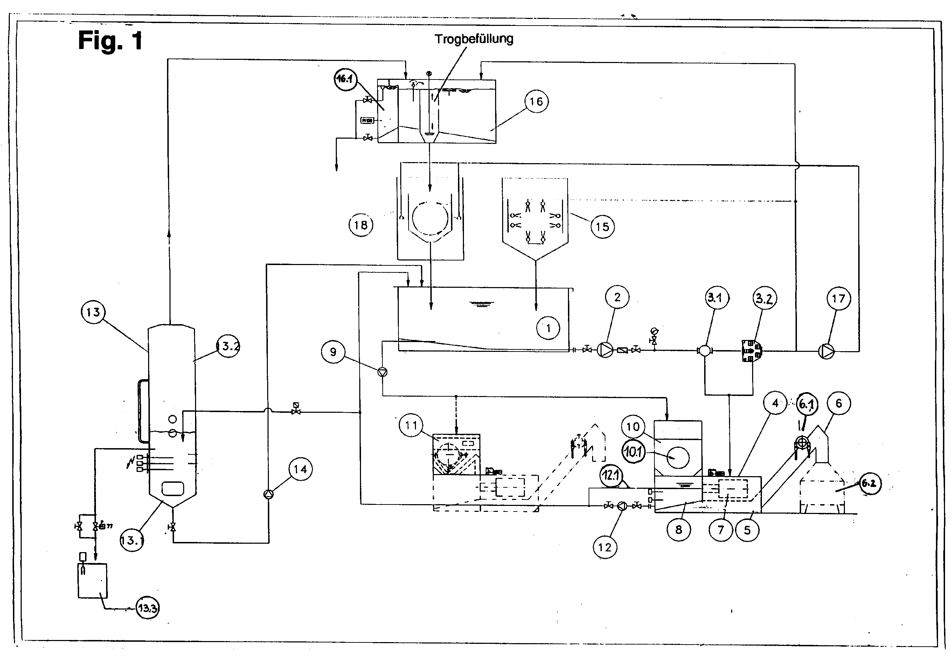

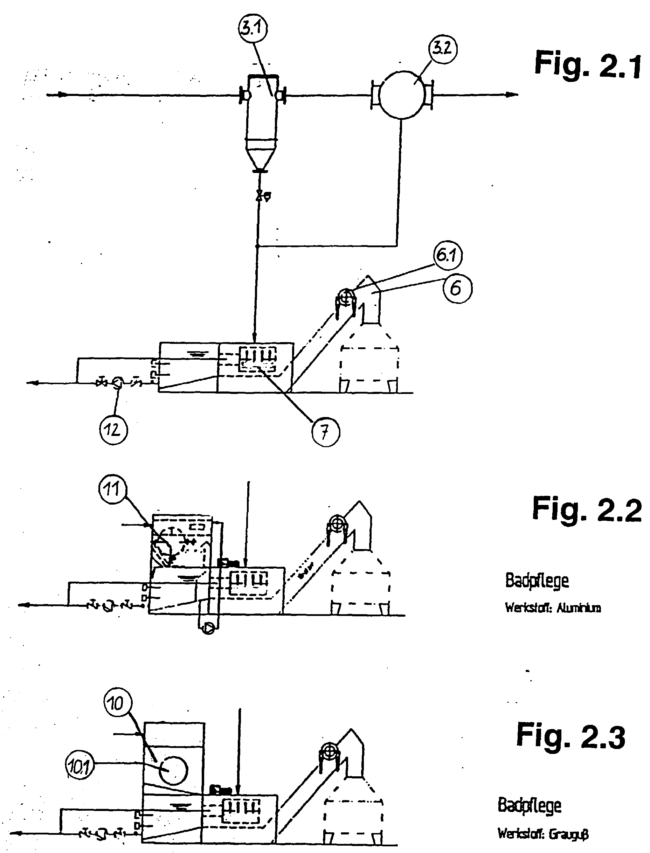

Die vorliegende Erfindung wird nachfolgend anhand der Figuren beispielhaft näher erläutert, die bevorzugte Ausführungsformen der Erfindung zeigen. So zeigt **Figur 1** ein Fließschema der erfindungsgemäßen Badpflege in zwei Schritten einschließlich des Hauptstroms der Reinigungsanlage; **Figur 2.1** die Badpflegevorrichtung für die Aufbereitung von verschmutztem Behandlungsmedium, das zur Spülung der Filtervorrichtung des Hauptstroms verwendet worden ist gemäß der ersten erfindungsgemäßen Stufe; **Figur 2.2** eine erfindungsgemäße Vorrichtung zur Behandlung von verschmutztem Behandlungsmedium einer Aluminium- oder Magnesiumwerkstückreinigungsanlage gemäß der zweiten Stute; und **Figur 2.3** eine Vorrichtung für die Behandlung von Reinigungsmedium aus einer Graugußreinigungsanlage im Nebenstrom gemäß der zweiten erfindungsgemäßen Stufe.

Das bei der Reinigung der Werkstücke in den Vorrichtungen 18 und 15 anfallende, mit Schmutzpartikeln und weiteren Verunreinigungen wie Fett etc. belastete Reinigungsmedium wird in dem Schmutzwassertank 1 gesammelt.
Von dort wird es im Hauptstrom der Reinigungsanlage über eine Förderpumpe 2 einer Filtervorrichtung 3 zugeführt. In der Filtervorrichtung wird das belastete Reinigungsbad soweit wie erforderlich von Schmutzpartikeln befreit und direkt den Reinigungsvorrichtungen 18 und 15 zugeführt.

Ist - wie in Figur 1 dargestellt - die Reinigungsvorrichtung 18 ein Druckumflutbehandlungssystem, kann das Reinigungsmedium über eine Druckerhöhungspumpe 17 auf den erforderlichen Druck gebracht werden.

Die Förderpumpe 2 kann eine beliebige geeignete Förderpumpe sein, wie zum Beispiel eine Kanalrad-Förderpumpe.

Ebenso kann die Filtervorrichtung 3 je nach Art der Verunreinigungen beliebig gewählt werden, wobei die Gewebefeinheit der Filtervorrichtung je nach Bedarf variieren kann.

Für Reinigungsanlagen für beispielsweise zerspante Werkstücke in der metallverarbeitenden Industrie hat sich insbesondere ein Zweistufenfeinstfilter mit einem Grobschmutzvorabscheider 3.1 und einem Automatik-Rückspülfilter 3.2 bewährt.

Für Reinigungsanlagen für Werkstücke, wie sie zum Beispiel in der Motoren- und Getriebefertigung der Automobil- und Zulieferindustrie eingesetzt werden, hat der Grobschmutzvorabscheider 3.1 vorzugsweise eine Gewebefeinheit von 500 bis 2000 µm und der Automatik-Rückspülfilter eine Gewebefeinheit von beispielsweise etwa 50 µm.

In dem in Figur 1 gezeigten Automatik-Rückspülfilter werden Span- und Schmutzpartikel mit einer Korngröße von 50 µm in zwei Achsen zurückgehalten und automatisch abgeschieden.

Der Automatik-Rückspülfilter enthält mehrere Filterkammern, wobei jeweils eine Kammer gereinigt werden kann, während die anderen zur Filtrierung zur Verfügung stehen.

Als Grobschmutzvorabscheider 3.1 kann zum Beispiel ein Topffilter eingesetzt werden.

Die Filtervorrichtung 3, hier die beiden Filtereinheiten 3.1 und 3.2 umfassend, verfügt über ein takt- und/oder verschmutzungsgesteuertes Abscheidesystem zur Entfernung der zurückgehaltenen Schmutzpartikel aus den Filtern, das an die erfindungsgemäße Badpflegeeinheit 4 angeschlossen ist.

Die Abscheidung der in der Filtervorrichtung 3 zurückgehaltenen Schmutzpartikel kann taktgesteuert abhängig von den Taktzeiten der Reinigungsvorrichtungen 18 und 15 erfolgen. Dabei wird in Zeiten, in denen kein frisches Reinigungsmedium für die Reinigungsvorrichtungen benötigt wird, da zum Beispiel die Werkstücke gewechselt werden, Reinigungsmedium, das aus dem Schmutzwassertank entnommen wird, zur Durchspülung der Filtervorrichtung verwendet und das nunmehr zusätzlich mit den in den Filtern zurückgehaltenen Schmutzpartikeln belastete Reinigungsmedium der Badpflegeeinheit 4 zugeführt, mit der die erfindungsgemäße erste Stufe der Badpflege durchgeführt werden kann. Die Steuerung der Schmutzpartikelabscheidung aus der Filtervorrichtung 3 kann auch über den Verschmutzungsgrad, zum Beispiel über die entstehende anwachsende Druckdifferenz, erfolgen.

In der Badpflegeeinheit 4 werden die Schmutzpartikel aus dem Kreislauf der Reinigungsanlage entfernt und das gereinigte, aufbereitete Reinigungsmedium wieder in den Hauptstromkreislauf, beispielsweise über den Schmutzwassertank, zurückgeführt.

In einer Ausgestaltung der in Figur 1 schematisch gezeigten Reinigungsanlage erfolgt die Reinigung bzw. Spülung der Filtervorrichtung in Taktzeiten von 2 min und Entnahme von ca. 0,18 m³ Reinigungsmedium, was einem Volumen von 5 m³ pro Stunde entspricht.

Das aufbereitete Reinigungsmedium wird vorzugsweise dem Schmutzwassertank zugeführt, um zu verhindern, daß möglicherweise noch in dem Reinigungsmedium vorhandene größere Schmutzpartikel direkt in die Reinigungsvorrichtungen gelangen können.

Die Badpflegeeinheit 4 enthält einen Sedimentationstank 5, der vorzugsweise mehrfache Schikanenbleche aufweist, die den Absetzvorgang der eingetragenen Späne und des Schmutzes unterstützen und beschleunigen.

Das Reinigungsmedium gelangt über eine Filtervorrichtung 7 in ein Reinwasserabteil 8 und kann von dort in den Hauptstrom zurückgeführt werden.

Als Filtervorrichtung 7 kann ein vorzugsweise selbstreinigender Drehtrommelfeinstfilter eingesetzt werden. Die Gewebefeinheit der Filtervorrichtung 7 richtet sich wiederum nach dem erwünschten Reinheitsgrad.

Für Reinigungsanlagen für Werkstücke für die Automobilindustrie sollte sie möglichst gering sein, wobei die Gewebefeinheit etwa 80 µm, vorzugsweise kleiner 80 µm, betragen sollte.

Vorzugsweise ist die Filtervorrichtung selbstreinigend. Beispielsweise können in dem in der Figur 1 gezeigten Drehtrommelfeinstfilter Düsen vorgesehen sein, durch die ein Fluid zur Beseitigung des Filterkuchens auf der Trommelaußenseite strömt.

Als Fluid wird zweckmäßigerweise das aufbereitete Reinigungsmedium selbst gewählt. In diesem Fall kann das Reinigungsmedium aus dem Reinwassertank 8 über einen Nebenkreislauf 12.1 dem Trommelinneren zugeführt werden.

Die erfindungsgemäße Badpflegeeinheit 4 enthält zudem eine geeignete Fördervorrichtung 6, mit der die sedimentierten Schmutzpartikel, wie Späne etc. aus dem Sedimentationstank 5 und damit aus dem Reinigungskreislauf entfernt werden.

In der in Figur 1 gezeigten bevorzugten Ausführungsform ist als Fördervorrichtung 6 ein Kratzbandförderer vorgesehen.
Wie gezeigt, ist die Förderrichtung vorzugsweise nach oben aufwärts gerichtet, so daß an den Schmutzpartikeln anhaftendes Reinigungsmedium abtropfen und ggf. in den Kreislauf zurückgeführt werden kann.
Weiter ist die Fördervorrichtung 6 vorzugsweise mit einer Trocknungsvorrichtung 6.1, zum Beispiel einem Gebläse wie einem Seitenkanalverdichter, versehen, die die Entfernung von an den Schmutzpartikeln anhaftendem Reinigungsmedium unterstützt.
Die nunmehr möglichst trockenen Schmutzpartikel können in einem Behälter 6.2 gesammelt und von dort entsorgt werden.

Durch die vorstehend beschriebene bevorzugte Ausgestaltung der Fördervorrichtung 6 wird gewährleistet, daß die aus dem Reinigungskreislauf entfernten Schmutzpartikel weitestgehend trocken sind und somit auf einfache Art und Weise entsorgt werden können und gleichzeitig kein oder nur wenig Reinigungsmedium dem Kreislauf entzogen wird.

Das von der Fördervorrichtung 6 abtropfende oder durch die Trocknungsvorrichtung entfernte Reinigungsmedium kann innerhalb des Kratzerhalses in den Sedimentationstank zurückfließen.

Der Austrag der Schmutzpartikel kann nach Bedarf erfolgen und takt- und/oder zeitgesteuert sein.

Die erfindungsgemäße Badpflegeeinheit ermöglicht eine kontinuierliche Pflege von Reinigungsmedien für Reinigungsanlagen außerhalb des Hauptstromes der Reinigungsanlage, ohne den Betrieb der Reinigungsanlage dabei zu beeinträchtigen.

In Figur 1 ist das erfindungsgemäße Badpflegeverfahren nach der ersten Stufe in Kombination mit der zweiten Stufe gezeigt, daß heißt, der Aufbereitung von belastetem Medium, das dem Schmutzwassertank 1 direkt in einem Nebenstrom entnommen wird.

Dabei wird das belastete Reinigungsmedium über eine Pumpe 9, beispielsweise einer Kanalradpumpe, einer Abscheide- bzw. Filtervorrichtung 10, 11 für die Schmutzpartikel zugeführt.
Die Abscheide- bzw. Filtervorrichtung wird je nach Art der zu entfernenden Schmutzpartikel gewählt.

Handelt es sich bei den Schmutzpartikeln um magnetische Teilchen, wie sie zum Beispiel bei der Reinigung von Werkstücken aus Grauguß anfallen, wird als Abscheidevorrichtung vorzugsweise ein Magnetabscheider 10 gewählt. Eine entsprechende Badpflegeeinrichtung umfassend die vorstehend beschriebene Badpflegeeinheit 4 in Kombination mit einem Magnetabscheider 10, ist in Figur 2.3 dargestellt.

Der Magnetabscheider 10 verfügt vorzugsweise über eine Permanentmagnetwalze 10.1 mit 2- bis 3-facher Magnetkraft, so daß auch feinste metallhaltige Schmutzpartikel wie Span- und Graphitteilchen, angezogen werden.

Das verunreinigte Reinigungsmedium wird dem Magnetabscheider 10 direkt aus dem Schmutzwassertank 1 zugeführt, das erhaltene gereinigte Reinigungsmedium wird dann vorzugsweise dem Sedimentationstank 5 der Badpflegeeinheit 4 zugesetzt und gelangt von dort über die Filtervorrichtung 7 in das Reinwasserabteil.
Indem das in dem Magnetabscheider 10 erhaltene gereinigte Reinigungsmedium zunächst dem Sedimentationstank 5 zugesetzt wird, wird sichergestellt, daß Schmutzpartikel, die von dem Magnetabscheider 10 nicht zurückgehalten worden sind, aus dem Reinigungsmedium entfernt und nicht in den Hauptstrom der Reinigungsanlage eingeschleppt werden.

Aus dem Reinwasserabteil 8 kann das aufbereitete Reinigungsmedium in den Hauptstrom zurückgeführt werden. Vorzugsweise wird es wiederum dem Schmutzwassertank zugesetzt, um ein Einschleppen von möglicherweise durch die erfindungsgemäße Badpflegeeinrichtung nicht erfassten Schmutzpartikeln in die Reinigungsvorrichtungen zu vermeiden.

Handelt es sich bei den Schmutzpartikeln um nichtmagnetische Partikel, wie sie beispielsweise bei der Behandlung von Aluminium-, Magnesium- oder Werkstücken aus Aluminium- oder Magnesiumlegierungen anfallen, wird als Abscheide- bzw. Filtervorrichtung vorzugsweise ein Filter 11 gewählt.

Eine erfindungsgemäße Badpflegeeinrichtung, die eine Kombination aus der erfindungsgemäßen Badpflegeeinheit 4 mit einer Filtervorrichtung 11 umfaßt, ist in Figur 2.2 dargestellt.

In diesem Fall wird das verunreinigte Reinigungsmedium aus dem Schmutzwassertank im Nebenstrom über die Pumpe 9 dem Filter 11, wie zum Beispiel einem Druckbandfilter, einem Zykton oder einer anderen geeigneten Abscheidevorrichtung zugeführt. Erfindungsgemäß besonders bevorzugt ist ein Druckbandfilter, beispielsweise mit endlosem wartungsfreiem Band, dessen Gewebefeinheit in der Größenordnung von 30 µm liegen kann.
Anders als im Fall des Magnetabscheiders 10 kann das gereinigte Reinigungsmedium direkt in das Reinwasserabteil geleitet werden, wovon es über eine Pumpe 12 zurück in den Hauptstrom geführt werden kann.

Die vorstehend anhand der Figuren 2.2 und 2.3 beschriebenen Badpflegeverfahren im Nebenstrom durch direkte Entnahme des mit Schmutzpartikeln belasteten Reinigungsmedium aus dem Schmutzwassertank 1 (zweite Stufe) kann unabhängig von der Aufbereitung von Reinigungsmedium, das über die Filtervorrichtung 3 aus dem Hauptstrom in die Badpflegeeinheit 4 (erste Stufe) gelangt, erfolgen.
Die Pflege gemäß der zweiten Stufe durch direkte Entnahme aus dem Schmutzwassertank 1 kann kontinuierlich oder absatzweise erfolgen.
So ist sie insbesondere geeignet zur Aufbereitung des Reinigungsmediums während Stillstandzeiten der Reinigungsanlage, beispielsweise während Wartungszeiten etc.

Zudem ermöglicht die direkte Entnahme eine Aufbereitung des gesamten Volumens an Reinigungsmedium in dem Schmutzwassertank innerhalb sehr kurzer Zeiten. Beispielsweise erfolgt bei einem üblichen Schmutzwassertankvolumen von 5 m³ und einer Pumpenleistung von 6 m³/h alle 50 min eine Aufbereitung des Gesamtschmutzwasservolumens im Nebenstrom.

Die Leistung der für das erfindungsgemäße Verfahren und Vorrichtung eingesetzten Pumpen richtet sich nach den erwünschten Durchsatzvolumen.

Wahlweise kann die erfindungsgemäße Vorrichtung zur Badpflege mit einem Verdampfer 13 für die Restölabscheidung ausgerüstet sein. In dem Verdampfer 13 können die im auf bereiteten Reinigungsmedium noch verbliebenen Restöl- und Schmutzanteile auf getrocknet, in einem Sammelbehälter 13.1 aufgefangen und zur gesonderten Entsorgung im allgemeinen diskontinuierlich abgeschieden werden.
Das gewonnene Destillat 13.2 kann über eine Pumpe 14 niveaugesteuert in den Hauptstrom der Reinigungsanlage zurückgeführt werden.

Die in der Figur 1 gezeigte Ausführungsform eines Saubertanks 16 umfaßt zusätzlich einen Ölabscheider 16.1.

Es versteht sich, daß sich die vorliegende Erfindung nicht auf die in Figur 1 gezeigte bevorzugte Ausführungsform beschränkt, die eine kombinierte Badpflege darstellt, umfassend die Aufbereitung von Reinigungsmedium gemäß der ersten Stufe, das über eine Filtervorrichtung 3 dem Hauptstrom entnommen wurde, und von Reinigungsmedium gemäß der zweiten Stufe, das in einem Nebenstrom direkt dem Schmutzwassertank 1 entnommen wurde, sondern daß unter die vorliegende Erfindung auch die einzelnen Badpflegestufen der Badpflege durch Entnahme über die Filtervorrichtung des Hauptstromes einerseits und die direkte Entnahme über einen Nebenstrom andererseits fallen.

Weiter können erfindungsgemäß je nach Bedarf und Verwendungszweck beliebige Abscheide- und Filtervorrichtungen eingesetzt werden.

Auch versteht sich, daß die in den Figuren gezeigten Ventile nicht zwingend sind, sondern je nach Bedarf und Zweckmäßigkeit versetzt, ergänzt oder weggelassen werden können.

Das vorstehend beschriebene Verfahren und Vorrichtung zur Badpflege von Reinigungsanlagen kann für jede beliebige, geeignete Reinigungsanlage angepaßt und verwendet werden.

### Bezugszeichenliste

- 1: Schmutzwassertank
- 2: Förderpumpe
- 3: Filtervorrichtung mit Grobschmutzvorabscheider 3.1 und Automatik-Rückspülfilter 3.2
- 4: Badpflegeeinheit
- 5: Sedimentationstank
- 6: Fördervorrichtung zum Austragen der Schmutzpartikel
- 6.1: Trocknungsvorrichtung
- 6.2: Sammelbehälter für Schmutzpartikel
- 7: Filtervorrichtung
- 8: Reinwasserabteil
- 9: Förderpumpe für Badreinigung im Nebenstrom
- 10: Magnetabscheider
- 10.1: Magnetwalze
- 11: Filtervorrichtung
- 12: Förderpumpe zur Rückführung des aufbereiteten Mediums in den Hauptstrom
- 13: Verdampfer
- 13.1: Sammelbehälter für Restöl- und Schmutzanteile
- 13.2: Destillat
- 13.3: Ölfauffangbehälter
- 14: Förderpumpe
- 15: Reinigungsvorrichtung (Grauwasser)
- 16: Saubertank
- 16.1: Ölabscheider
- 17: Druckerhöhungspumpe
- 18: Reinigungsvorfichtung (Druckumflutbehandlungssystem TR)

## Patentansprüche

1. Vorrichtung für die Pflege von Reinigungsmedien an Reinigungsanlagen außerhalb des Hauptstromes der Reinigungsanlage umfassend mindestens eine Abscheide- bzw. Filtervorrichtung 7, 10 oder 11 zur Feinabtrennung von Schmutzpartikeln aus dem Reinigungsmedium, wobei die maximale Partikelgröße in dem aufbereiteten Reinigungsmediums kleiner ist als die maximale Partikelgröße in dem unbehandelten Reinigungsmedium, und ein Sammelbecken 8 für das wiederauf bereitete Medium.

2. Vorrichtung für die Pflege von Reinigungsmedien nach Anspruch 1,
**dadurch gekennzeichnet,**
**daß** die Abscheide- bzw. Filtervorrichtung ein Drehtrommelfeinfilter 7 ist und die Vorrichtung zusätzlich einen Sedimentationstank 5 zur Aufnahme von mit Schmutzpartikeln belasteten Reinigungsmedium und eine Fördervorrichtung 6 zum Austragen der Schmutzpartikel aus dem Sedimentationstank 5 enthält.

3. Vorrichtung für die Pflege von Reinigungsmedien nach Anspruch 2,
**dadurch gekennzeichnet,**
**daß** der Drehtrommelfeinfilter 7 selbstreinigend ist.

4. Vorrichtung für die Pflege von Reinigungsmedien nach Anspruch 2 oder 3,
**dadurch gekennzeichnet,**
**daß** der Drehtrommelfeinfilter eine Gewebefeinheit von kleiner 80 µm hat.

5. Vorrichtung für die Pflege von Reinigungsmedien nach einem der Ansprüche 2 bis 4,
**dadurch gekennzeichnet,**
**daß** der Sedimentationstank 5 mit einem oder mehreren Schikanenblechen ausgestattet ist.

6. Vorrichtung für die Pflege von Reinigungsmedien nach einem der Ansprüche 2 bis 5,
**dadurch gekennzeichnet,**
**daß** die Fördervorrichtung 6 ein Kratzbandförderer ist.

7. Vorrichtung für die Pflege von Reinigungsmedien nach einem der Ansprüche 2 bis 6,
**dadurch gekennzeichnet,**
**daß** die Fördervorrichtung 6 mit einer integrierten Trocknungseinheit 6.1 ausgerüstet ist.

8. Vorrichtung für die Pflege von Reinigungsmedien nach einem der Ansprüche 1 bis 7,
**dadurch gekennzeichnet,**
**daß** die Vorrichtung einen Magnetabscheider 10 umfaßt.

9. Vorrichtung für die Pflege von Reinigungsmedien nach einem der Ansprüche 1 bis 7,
**dadurch gekennzeichnet,**
**daß** die Vorrichtung einen Filter 11 umfaßt.

10. Vorrichtung für die Pflege von Reinigungsmedien nach Anspruch 9,
**dadurch gekennzeichnet,**
**daß** der Filter 11 ein Druckbandfilter ist.

11. Vorrichtung für die Pflege von Reinigungsmedien nach einem der Ansprüche 9 oder 10,
**dadurch gekennzeichnet,**
**daß** der Filter 11 eine Gewebefeinheit von etwa 30 µm hat.

12. Vorrichtung für die Pflege von Reinigungsmedien nach einem der Ansprüche 1 bis 7,
**dadurch gekennzeichnet,**
**daß** als Abscheide- bzw. Filtervorrichtung 11 ein Zyklon verwendet wird.

13. Vorrichtung für die Pflege von Reinigungsmedien nach einem der vorstehenden Ansprüche,
**dadurch gekennzeichnet,**
**daß** der Vorrichtung ein Verdampfer 13 zur Entfernung von Öl- und/oder restlichen Schmutzanteilen aus dem Behandlungsmedium nachgeschaltet ist oder im Nebenstrom verwendet wird.

14. Verfahren zur Pflege von Reinigungsmedien an Reinigungsanlagen außerhalb des Hauptstromes einer Reinigungsanlage, wobei mit Schmutzpartikeln belastetes Reinigungsmedium aus dem Hauptstrom einer Badpflegevorrichtung zugeführt wird, das mit Schmutzpartikeln belastete Reinigungsmedium über mindestens eine Abscheide- bzw. Filtervorrichtung 7, 10 oder 11 zur Feinabtrennung der Schmutzpartikel geleitet wird und das aufbereitete Reinigungsmedium mit einer maximalen Partikelgröße, die kleiner ist, als die maximale Partikelgröße in dem unbehandelten Reinigungsmedium einem Sammelbecken 8 für das behandelte Reinigungsmedium zur Rückführung in den Hauptstrom zugeführt wird.

15. Verfahren zur Pflege von Reinigungsmedien nach Anspruch 14,
**dadurch gekennzeichnet,**
**daß** das belastete Reinigungsmedium Reinigungsmedium ist, das zur Spülung einer Filtervorrichtung 3 im Hauptstrom verwendet wurde, und die Aufbereitung dieses belasteten Reinigungsmediums erfolgt, indem das Reinigungsmedium dem Sedimentationstank 5 einer Badpflegeeinheit 4 zugeführt wird, wobei in dem Sedimentationstank 5 als Abscheidevorrichtung 7 ein Drehtrommelfeinfilter angeordnet ist, das Reinigungsmedium über den Drehtrommelfeinfilter in ein Sammelbecken 8 geleitet wird, von dort in den Hauptstrom zurückgeführt wird und die in dem Sedimentationstank 5 abgesetzten Schmutzpartikel über eine Fördervorrichtung 6 aus der Badpflegeeinheit 4 entfernt werden.

16. Verfahren zur Pflege von Reinigungsmedien nach Anspruch 15,
**dadurch gekennzeichnet,**
**daß** der Drehtrommelfeinfilter 7 selbstreinigend ist und durch Zuführung von auf bereiteten Reinigungsmedium gespült wird.

17. Verfahren zur Pflege von Reinigungsmedien nach Anspruch 15,
**dadurch gekennzeichnet,**
**daß** von der Fördervorrichtung 6 abgetropftes Reinigungsmedium in die Badpflegeeinheit 4 zurückgeführt wird.

18. Verfahren zur Pflege von Reinigungsmedien mit magnetischen Verunreinigungen nach einem der Ansprüche 14 bis 17,
**dadurch gekennzeichnet,**
**daß** das Reinigungsmedium dem Schmutzwassertank 1 in einem Nebenstrom entnommen wird, zur Abtrennung der magnetischen Schmutzpartikel einer Abscheide- bzw. Filtervorrichtung 10, die ein Magnetabscheider ist, zugeführt wird, die zurückgehaltenen Schmutzpartikel aus dem System entfernt und das gewonnene wiederaufbereitete Reinigungsmedium dem Sedimentationstank 5 einer Badpflegeeinrichtung 4 gemäß den Ansprüchen 15 bis 17 zugeführt wird.

19. Verfahren zur Pflege von Reinigungsmedien für die Reinigung von Werkstücken aus Aluminium, Magnesium oder deren Legierungen,
**dadurch gekennzeichnet,**
**daß** das belastete Reinigungsmedium aus dem Schmutzwassertank 1 über einen Nebenstrom einer Abscheide- bzw. Filtervorrichtung 11, die ein Filter ist, zugeführt wird, die durch den Filter zurückgehaltenen Schmutzpartikel aus dem System entfernt werden und das Reinigungsmedium über das Sammelbecken 8 in den Hauptstrom zurückgeführt wird.

20. Verfahren zur Pflege von Reinigungsmedien nach Anspruch 19, wobei die Filtervorrichtung 11 ausgewählt ist unter einem Druckbandfilter oder einem Zyklon.

21. Verfahren zur Pflege von Reinigungsmedien nach einem der Ansprüche 14 bis 20,
**dadurch gekennzeichnet,**
**daß** die Wiederaufbereitung von direkt aus dem Schmutzwassertank 1 im Nebenstrom entnommenen Reinigungsmedium und Reinigungsmedium, das zur Spülung einer Filtervorrichtung 3 im Hauptstrom verwendet worden ist, kombiniert erfolgt.

22. Verfahren zur Pflege von Reinigungsmedien nach einem der Ansprüche 14 bis 21,
**dadurch gekennzeichnet,**
**daß** das gewonnene, aufbereitete Reinigungsmedium vor der Rückführung in den Hauptstrom einem Verdampfer zum Abtrennen von Restöl und/oder noch verbliebenen Schmutzanteilen zugeführt wird.

23. Verfahren zur Pflege von Reinigungsmedien nach einem der Ansprüche 14 bis 20,
**dadurch gekennzeichnet,**
**daß** die Pflege kontinuierlich durchgeführt wird.

24. Verfahren zur Pflege von Reinigungsmedien nach einem der Ansprüche 14 bis 23,
**dadurch gekennzeichnet,**
**daß** die Spülung der Filtervorrichtung 3 mit verbrauchten Reinigungsmedium im Hauptstrom takt- und/oder verschmutzungsgesteuert erfolgt.

25. Verfahren zur Pflege von Reinigungsmedien nach einem der Ansprüche 14 bis 24,
**dadurch gekennzeichnet,**
**daß** das Reinigungsmedium ein wäßriges Reinigungsmedium ist.

26. Verwendung einer Vorrichtung zur Pflege von Reinigungsmedien nach einem der Ansprüche 1 bis 13 für eine Reinigungsanlage von Werkstücken in der metallverarbeitenden Industrie.

27. Verwendung einer Vorrichtung zur Pflege von Reinigungsmedien nach einem der Ansprüche 1 bis 13 für Werkstücke der Motoren- und Getriebefertigung.
